# EUROPÄISCHE PATENTSCHRIFT

(11) **EP 2 463 537 B1**
(45) Veröffentlichungstag und Bekanntmachung des Hinweises auf die Patenterteilung: **09.03.2016**
(21) Anmeldenummer: 11192292.8
(22) Anmeldetag: 07.12.2011
(51) Int. Cl.: F16C 19/52, F16C 33/62

(54) **Korrosionsgeschütztes Lager**
Corrosion-resistant bearing
Palier protégé contre la corrosion

(30) Priorität: 07.12.2010 DE 102010062573; 21.10.2011 DE 102011084952
(43) Veröffentlichungstag der Anmeldung: 13.06.2012
(73) Patentinhaber: Aktiebolaget SKF, 415 50 Göteborg (SE)
(72) Erfinder: von Schleinitz, Thilo, 97422 Schweinfurt (DE); Hackbart, Hubert, 97422 Schweinfurt (DE)
(74) Vertreter: Schonecke, Mitja

(56) Entgegenhaltungen:
- EP-A1- 1 577 217
- EP-A1- 1 845 030
- WO-A1-2011/064061
- DE-A1-102008 046 357
- JP-A- 2004 224 426
- JP-A- 2008 309 312

## Beschreibung

Die Erfindung betrifft ein korrosionsgeschütztes Lager, insbesondere ein Großlager, insbesondere einer Windkraftanlage sowie ein korrosionsgeschütztes Lagerbauteil. Weiterhin betrifft die Erfindung ein Verfahren zum Korrosionsschutz eines Lagers und die Verwendung einer Kunststofffolie zum Korrosionsschutz eines Lagers.

Lager sind mitunter korrosiven Umweltbedingungen ausgesetzt, welche beispielsweise durch Rostfraß zu einer Schädigung des Lagers bis hin zu einer ernsthaften Funktionsbeeinträchtigung führen können. Beispielsweise können die Lager einer Windkraftanlage einer Feuchtigkeitseinwirkung, bei einer Anwendung im Offshore-Bereich insbesondere der Einwirkung von Salzwasser ausgesetzt sein. Da es in der Regel erforderlich ist, das für die Herstellung des Lagers verwendete Material im Hinblick auf eine optimale Funktionsweise zu optimieren und/oder aus Kostengründen werden in der Regel bei Lagern keine oder zumindest nicht ausschließlich korrosionsresistente Werkstoffe eingesetzt. Wenn ein Korrosionsschutz benötigt wird, ist es daher erforderlich, diesen beispielsweise durch Aufbringen eines Korrosionsschutzlacks auszubilden. Dies ist mitunter aufwendig, da gewisse Funktionsflächen wie beispielsweise Gleitflächen, Wälzkörperlaufbahnen und abhängig von der Art des verwendeten Lacks evtl. auch Sitz- oder Anlageflächen nicht mit dem Lack beschichtet werden dürfen. Außerdem hält die antikorrosive Wirkung einer Lackbeschichtung abhängig von den Umgebungsbedingungen unter Umständen nur wenige Jahre vor. Zudem kann es bei einer Beschädigung der Lackschicht beispielsweise infolge einer mechanischen Einwirkung zu einem zumindest lokalen Verlust des Korrosionsschutzes kommen.

Aus der EP 1 577 217 A1 ist ein Verfahren zum Umwickeln eines Lang- oder Rundteils bekannt, bei dem das Teil mit einer Stretchfolie umwickelt wird und über die Stretchfolie ein Bandmaterial mit einer Klebstoffbeschichtung gewickelt wird, um einen zuverlässigen Transportschutz zu erzielen.

Der Erfindung liegt daher die Aufgabe zugrunde, ein Lager mit vertretbarem Aufwand zuverlässig und langdauernd vor Korrosion zu schützen.

Diese Aufgabe wird durch die Merkmalkombinationen der nebengeordneten Ansprüche gelöst.

Das erfindungsgemäße Lager weist wenigstens eine Fläche auf, auf der zum Korrosionsschutz eine Bahn oder mehrere nebeneinander angeordnete Bahnen einer Kunststofffolie direkt auf ein Stahlmaterial des Lagers aufgebracht sind, wobei zwischen den Enden der einen Bahn und/oder zwischen den nebeneinander angeordneten Bahnen der Kunststofffolie ausgebildete Stöße überlappend ausgeführt sind. Die Kunststofffolie ist dauerhaft auf die Fläche aufgebracht und mit dem Lager verklebt.

Die Erfindung hat den Vorteil, dass mit vergleichsweise einfachen Mitteln ein hoch wirksamer und dauerhafter Korrosionsschutz des Lagers erreichbar ist. Die Kunststofffolie kann extrem widerstandsfähig ausgebildet sein.

Das Lager kann zur Lagerung, insbesondere zur drehbaren Lagerung, eines ersten Maschinenteils relativ zu einem zweiten Maschinenteil ausgebildet sein. Das Lager kann als ein Gleitlager oder ein Wälzlager ausgebildet sein. Das Lager kann als ein Großlager, insbesondere einer Windkraftanlage, ausgebildet sein. Beispielsweise kann die Kunststofffolie auf einen Lagerring aufgebracht sein. Die Kunststofffolie kann im Bereich von Außenflächen des Lagers aufgebracht sein, die im eingebauten Zustand des Lagers keinen mechanischen Kontakt mit sonstigen Bauteilen haben. Die Kunststofffolie kann außerhalb von Funktionsflächen oder von sonstigen Flächen des Lagers aufgebracht sein, bei denen hohe Anforderungen an die Maßhaltigkeit gestellt werden, wie beispielsweise Anlaufflächen von Dichtungen, Sitzflächen, Anschlagflächen usw.

Die Kunststofffolie kann eine Klebstoffschicht aufweisen, die auf ein Foliensubstrat aufgebracht ist. Das Foliensubstrat kann ein Vinylmaterial aufweisen oder aus einem Vinylmaterial bestehen. Das Foliensubstrat kann eine Dicke zwischen 50 µm und 120 µm, insbesondere zwischen 80 µm bis 100 µm, aufweisen. Die Klebstoffschicht kann einen Acryl-Klebstoff, insbesondere einen Klaracryl-Klebstoff aufweisen oder daraus bestehen. Ein derartiger Klebstoff hat auf Dauer eine sehr hohe Haftkraft. Die Kunststofffolie kann diffusionsdicht ausgebildet sein. Weiterhin kann die Kunststofffolie eine Beschriftung aufweisen. Die Beschriftung kann Text- und/oder Bildinformationen enthalten.

Ebenso ist es auch möglich, dass die Kunststofffolie auf eine Beschichtung aufgebracht ist. Die Beschichtung kann eine Schichtdicke von wenigstens 30 µm, insbesondere wenigstens 50 µm aufweisen. Die Beschichtung kann auch Bereiche des Lagers außerhalb der Fläche abdecken, auf welche die Kunststofffolie aufgebracht ist. Auf diese Weise ist ein Schutz der Lageroberfläche auch außerhalb des von der Kunststofffolie abgedeckten Bereichs möglich. Die Beschichtung kann als eine Korrosionsschutzbeschichtung ausgebildet sein. Dies hat den Vorteil, dass auch im Falle einer Beschädigung der Kunststofffolie z. B. durch eine mechanische Einwirkung ein gewisser Korrosionsschutz erhalten bleibt Die Beschichtung kann einen Feststoffanteil von wenigstens 70%, insbesondere wenigstens 80 %, aufweisen. Die Beschichtung kann als einen Feststoff Zink und/oder Aluminium aufweisen.

Außerdem bezieht sich die Erfindung auf ein Verfahren zum Korrosionsschutz eines Lagers, wobei auf wenigstens eine Fläche des Lagers eine Bahn oder nebeneinander mehrere Bahnen einer Kunststofffolie direkt auf ein Stahlmaterial des Lagers aufgebracht werden und zwischen den Enden der einen Bahn und/oder zwischen den nebeneinander angeordneten Bahnen der Kunststofffolie ausgebildete Stöße überlappend ausgeführt werden. Die Kunststofffolie wird mit Hilfe einer Klebstoffschicht aufgeklebt, die als ein Bestandteil der Kunststofffolie ausgebildet ist.

Die als Bestandteil der Kunststofffolie ausgebildete Klebstoffschicht erleichtert das Aufbringen der Kunststofffolie. Die Fläche des Lagers kann vor dem Aufbringen der Kunststofffolie gereinigt und/oder entfettet werden.

Die Kunststofffolie, kann eine Klebstoffschicht aufweisen, die auf ein Foliensubstrat aufgebracht ist.

Das Foliensubstrat kann ein Vinylmaterial aufweisen oder aus einem Vinylmaterial bestehen und/oder die Klebstoffschicht kann einen Acryl-Klebstoff aufweisen oder daraus bestehen.

Die Erfindung wird nachstehend anhand der in der Zeichnung dargestellten Ausführungsbeispiele erläutert.

Es zeigen
- Figur 1: ein Ausführungsbeispiel eines erfindungsgemäß ausgebildeten Lagers in Seitenansicht,
- Figur 2: das in Figur 1 dargestellte Ausführungsbeispiel in Schnittdarstellung und
- Figur 3: ein weiteres Lager in einer Figur 2 entsprechenden Darstellung.

Dieses Lager gehört jedoch nicht zum Schutzumfang der Erfindung.

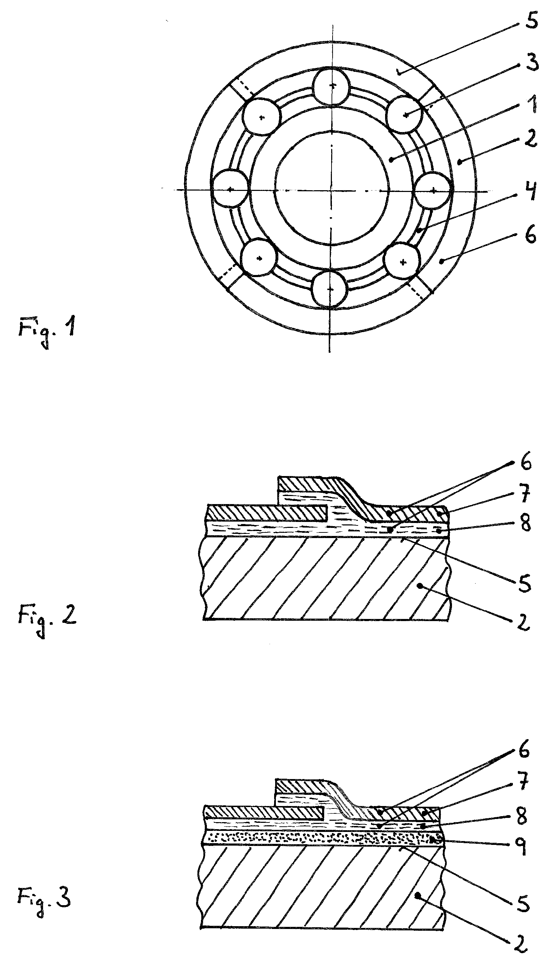

Figur 1 zeigt ein Ausführungsbeispiel eines erfindungsgemäß ausgebildeten Lagers in Seitenansicht.

Bei dem dargestellten Ausführungsbeispiel ist das Lager als ein Großwälzlager zur drehbaren Lagerung einer Komponente einer Windkraftanlage ausgebildet.

Das Lager weist einen Innenring 1 und einen Außenring 2 auf, zwischen denen Wälzkörper 3 abrollen. Der Innenring 1, der Außenring 2 und die Wälzkörper 3 sind jeweils aus einem Stahlwerkstoff hergestellt. Die Wälzkörper 3 sind in einem Käfig 4 angeordnet. Der Außenring 2 ist im Bereich einer Fläche 5 mit mehreren Bahnen einer Kunststofffolie 6 beklebt, wobei die Bahnen der Kunststofffolie 6 nebeneinander angeordnet sind und benachbarte Bahnen bereichsweise überlappen. Abweichend von der Darstellung der Figur 1 können die Bahnen der Kunststofffolie 6 in der Nähe einer Kante des Innenrings 1 oder des Außenrings 2 überlappen. Diese Überlappung kommt dadurch zustande, dass die Kante mit einer Bahn der Kunststofffolie 6 umklebt wird und dann eine weitere Bahn der Kunststofffolie 6 aufgeklebt wird, die sich bis nahe an die Kante erstreckt und mit der zuerst aufgeklebten Bahn der Kunststofffolie 6 überlappt. Auf diese Weise kann das im Bereich der Kante besonders ausgeprägte Risiko eines korrosiven Angriffs erheblich reduziert werden.

Figur 2 zeigt das in Figur 1 dargestellte Ausführungsbeispiel in Schnittdarstellung. Dabei ist lediglich ein Ausschnitt im Bereich eines Stoßes dargestellt, der zwischen benachbarten Bahnen der Kunststofffolie 6 ausgebildet ist.

Die Kunststofffolie 6 weist ein Foliensubstrat 7 auf, das mit einer Klebstoffschicht 8 beschichtet ist. Im Bereich des Stoßes überlappen benachbarten Bahnen der Kunststofffolie 6.

Figur 3 zeigt ein weiteres nicht unter die Erfindung fallendes Ausführungsbeispiel des Lagers in einer Figur 2 entsprechenden Darstellung.

Das Ausführungsbeispiel der Figur 3 entspricht in weiten Teilen der Figur 2. Im Unterschied zu Figur 2 ist beim Ausführungsbeispiel der Figur 3 jedoch die Fläche 5 des Außenrings 2 mit einer Beschichtung 9 versehen. Die Kunststofffolie 6 ist auf die Beschichtung 9 aufgebracht.

Um das Lager vor Korrosion zu schützen wird dieses erfindungsgemäß auf dafür vorgesehenen Flächen 5 mit der Kunststofffolie 6 beklebt. Wie in den Figuren 2 und 3 dargestellt, kann es sich bei der Kunststofffolie 6 um eine selbstklebende Kunststofffolie 6 handeln, die ein Foliensubstrat 7 aufweist, das mit einer Klebstoffschicht 8 beschichtet ist.

Das Foliensubstrat 7 kann aus einem Vinylmaterial hergestellt sein und typischerweise eine Dicke von 80 µm bis 100 µm aufweisen. Abweichungen sind möglich, führen aber bei geringeren Dicken zu einem weniger dauerhaften Korrosionsschutz und bei größeren Dicken potentiell zu Problem beim Verarbeiten der Kunststofffolie 6.

Die Klebstoffschicht 8 kann einen Klaracryl-Klebstoff aufweisen, der so auf das Foliensubstrat 7 aufgebracht ist, dass sich eine Gesamtdicke von ca. 120 µm für die Kunststofffolie 6 ergibt.

Die gemäß dem vorstehend beschriebenen Ausführungsbeispiel ausgebildete Kunststofffolie 6 ist kommerziell verfügbar und zeichnet sich dadurch aus, dass sie diffusionsdicht und sehr widerstandsfähig gegen korrosive Einwirkungen und auch gegenüber UV-Strahlung ist. Sie haftet sehr fest auf blankem oder mit einer geeigneten Beschichtung 9 versehenem Stahl, so dass mit der Kunststofffolie 6 ein Korrosionsschutz über einen Zeitraum von wenigstens ca. 10 Jahren erreichbar ist. Auch bei einer lokalen Beschädigung der Kunststofffolie 6 kommt es infolge der innigen Verbindung der Klebstoffschicht 8 mit dem Untergrund allenfalls lokal begrenzt zu einer Korrosion.

Wie in Figur 2 dargestellt, wird gemäß einer Ausführungsvariante des erfindungsgemäßen Verfahrens die Kunststofffolie 6 direkt, d. h. ohne dass zuvor ein Haftvermittler oder eine sonstige Beschichtung 9 aufgebracht wird, auf die dafür vorgesehenen Flächen 5 des Lagers aufgeklebt. Bei diesen Flächen 5 kann es sich insbesondere um Flächen handeln, die im eingebauten Zustand des Lagers einer korrosiven Einwirkung, beispielsweise durch Feuchtigkeit, insbesondere Regen- oder Meerwasser, ausgesetzt sind. Vor dem Aufkleben der Kunststofffolie 6 wird der Untergrund gereinigt und entfettet. Die Kunststofffolie 6 kann bei Raumtemperatur (ca. 20° C) verarbeitet und beispielsweise auf den Untergrund aufgerollt werden. Durch eine Erwärmung der Kunststofffolie 6 beispielsweise mittels eines Warmluftgebläses kann zum Beispiel das Umkleben von Kanten oder sonstigen ausgeprägt dreidimensionalen Strukturen erleichtert werden. Nicht zu überklebende Ausnehmungen des Lagers können entweder bereits im Vorfeld durch entsprechende Ausschnitte in der Kunststofffolie 6 berücksichtigt werden oder nach dem Aufkleben der Kunststofffolie 6 ausgeschnitten werden. Soweit es erforderlich ist, mehrere Bahnen der Kunststofffolie 6 nebeneinander aufzukleben, beispielsweise bei der großflächigen Umklebung von Kanten, werden die Stöße zwischen den Bahnen der Kunststofffolie 6 überlappend ausgeführt, um beispielsweise ein Eindringen korrosiver Flüssigkeiten in den Stoßbereich zuverlässig zu verhindern. Außerdem werden die Stöße nach Möglichkeit an Stellen ausgebildet, die im Hinblick auf eine äußere mechanische Einwirkung wenig exponiert sind. Dadurch soll verhindert werden, dass die im Überlappungsbereich der Kunststofffolie 6 erhöhte Dicke äußeren mechanischen Einwirkungen einen Angriffspunkt bietet, so dass formschlüssig Scherkräfte in die Kunststofffolie 6 eingebracht werden könnten und dadurch die Kunststofffolie 6 beschädigt werden könnte. Insbesondere werden die Stöße außerhalb von Bereichen ausgebildet, in denen vorgesehen ist, ein Werkzeug am Lager anzusetzen. Kanten werden vorzugsweise umklebt, da dort die Korrosionseinwirkung häufig besonders stark ausgeprägt ist.

Bei einem nicht zum Schutzumfang gehörenden Verfahren wird die Kunststofffolie 6 auf eine zuvor aufgebrachte Beschichtung 9 geklebt. Dies ist in Figur 3 dargestellt. Bei der Beschichtung 9 kann es sich insbesondere um eine Korrosionsschutz-Beschichtung handeln. Alternativ oder zusätzlich kann die Beschichtung 9 so ausgebildet sein, dass sie den Reibwert erhöht. Weiterhin ist es vorteilhaft eine Beschichtung 9 aufzubringen, die nur wenig kompressibel ist. Demgemäß eignen sich insbesondere Beschichtungen 9, die einen Feststoffanteil von wenigstens 70 % aufweisen, um zu verhindern, dass die Beschichtung 9 einer Druckeinwirkung in einem nicht vertretbaren Maß seitlich ausweicht. Bevorzugt werden Beschichtungen 9 mit einem Feststoffanteil zwischen 80 % und 90 % verwendet. Als Feststoffbestandteile der Beschichtung 9 eignen sich insbesondere Zink und Aluminium, sowohl einzeln oder auch gemeinsam. Die Beschichtung 9 wird in einer Schichtdicke von ca. 100 µm aufgebracht. Eine Schichtdicke von 30 µm sollte jedenfalls nicht unterschritten werden.

Die Beschichtung 9 kann lediglich im Bereich der zu beklebenden Flächen 5 aufgebracht werden. Ebenso ist es auch möglich, die Beschichtung 9 mit Ausnahme von Bereichen, die keine Beschichtung 9 vertragen, vollflächig aufzubringen. Dadurch kann vermieden werden, dass das Lager unmittelbar neben den beklebten Flächen 5 völlig ohne Korrosionsschutz ist und die so ausgebildete Stufe einen bevorzugten Angriffsbereich für die Korrosion darstellt.

Bei dem erfindungsgemäßen Lager kann es sich insbesondere um ein Großlager, beispielsweise ein Lager einer Windkraftanlage handeln, das als ein Gleitlager oder als ein Wälzlager ausgebildet ist. Das Lager kann sowohl als ein Axiallager als auch als ein Radiallager ausgebildet sein und weist einen Innenring 1 und einen Außenring 2 auf. Im Falle einer Ausbildung als ein Gleitlager stehen der Innenring 1 und der Außenring 2 direkt oder über einen Gleitbelag in Gleitkontakt zueinander. Bei einer Ausbildung als ein Wälzlager weisen der Innenring 1 und der Außenring 2 Wälzkörperlaufbahnen auf, auf denen Wälzkörper 3 abrollen. Das Lager ist aus einem Stahlwerkstoff, insbesondere aus einem Wälzlagerstahl oder einem sonstigen geeigneten Stahl hergestellt.

Wenigstens auf eine Fläche 5 des Lagers ist die Kunststofffolie 6 aufgeklebt. Abhängig von der Ausbildung des Lagers, der Einbausituation und den Umgebungsbedingungen können unterschiedliche Flächen 5 mit der Kunststofffolie 6 beklebt sein. In der Regel ist das Lager nicht vollflächig beklebt, da wenigstens die Wälzkörperlaufbahnen bzw. die Gleitflächen ausgespart sein müssen, um die Laufeigenschaften des Lagers nicht zu beeinträchtigen. In vielen Fällen empfiehlt es sich zudem nicht und/oder ist es nicht erforderlich, Sitzflächen des Lagers oder sonstige Anlageflächen zu bekleben. Durch die Beklebung würde die Maßhaltigkeit dieser Flächen beeinträchtigt. Außerdem könnte es infolge der zum Teil sehr hohen Anpressdrücke zu Problemen mit der Kunststofffolie 6 kommen. Dagegen sollte die Kunststofffolie 6 auf alle sonstigen Flächen 5 des Lagers aufgebracht sein, die korrosiven Einwirkungen ausgesetzt sein können.

Zusätzlich zur Funktion des Korrosionsschutzes kann die Kunststofffolie 6 auch eine Beschriftungsfunktion übernehmen. Hierzu wird die Kunststofffolie 6 vor dem Aufkleben mit einer Beschriftung versehen. Infolge der hohen Haftfestigkeit der Kunststofffolie 6 bleibt die Beschriftung dauerhaft erhalten.

### Bezugszeichenliste

- 1: Innenring
- 2: Außenring
- 3: Wälzkörper
- 4: Käfig
- 5: Fläche
- 6: Kunststofffolie
- 7: Foliensubstrat
- 8: Klebstoffschicht
- 9: Beschichtung

## Patentansprüche

1. Lager, das wenigstens eine Fläche (5) aufweist, auf der zum Korrosionsschutz eine Bahn oder mehrere nebeneinander angeordnete Bahnen einer Kunststoff- folie (6) direkt auf ein Stahlmaterial des Lagers aufgebracht sind, wobei zwischen den Enden der einen Bahn und/oder zwischen den nebeneinander angeordneten Bahnen der Kunststofffolie (6) ausgebildete Stöße überlappend ausgeführt sind, **dadurch gekennzeichnet, dass** die Kunststofffolie (6) dauerhaft auf die Fläche (5) aufgebracht und mit dem Lager verklebt ist.

2. Verfahren zum Korrosionsschutz eines Lagers, wobei auf wenigstens eine Fläche (5) des Lagers eine Bahn oder nebeneinander mehrere Bahnen einer Kunststofffolie (6) direkt auf ein Stahlmaterial des Lagers aufgebracht werden und zwischen den Enden der einen Bahn und/oder zwischen den nebeneinander angeordneten Bahnen der Kunststofffolie (6) ausgebildete Stöße überlappend ausgeführt werden, **dadurch gekennzeichnet, dass** die Kunststofffolie (6) mit Hilfe einer Klebstoffschicht (8), die als ein Bestandteil der Kunststofffolie (6) ausgebildet ist, dauerhaft auf die Fläche (5) aufgeklebt wird.

3. Lager nach Anspruch 1, wobei die Kunststofffoline (6) eine Klebstoffschicht (8) aufweist, die auf ein Foliensubstrat (7) aufgebracht ist.

4. Lager nach Anspruch 3, wobei das Foliensubstrat (7) ein Vinylmaterial aufweist oder aus einem Vinylmaterial besteht und/oder die Klebstoffschicht (8) einen Acryl-Klebstoff aufweist oder daraus besteht.

## Claims

1. Bearing which has at least one area (5) on which, for corrosion resistance, a strip or two or more strips arranged alongside one another of a plastics film (6) has/have been applied directly to a steel material of the bearing, where there are overlaps at the locations at which the ends of the single strip meet and/or at the locations at which the strips arranged alongside one another of the plastics film (6) meet, **characterized in that** the plastics film (6) has been durably applied to the area (5) and has been durably adhesive-bonded to the bearing.

2. Process for providing corrosion resistance to a bearing, where a strip or two or more strips arranged alongside one another of a plastics film (6) is/are applied to at least one area (5) of the bearing, directly to a steel material of the bearing, and there are overlaps at the locations at which the ends of the single strip meet and/or at the locations at which the strips arranged alongside one another of the plastics film (6) meet, **characterized in that** durable adhesive bonding of the plastics film (6) to the area (5) is achieved with the aid of an adhesive layer (8) which forms a constituent of the plastics film (6).

3. Bearing according to Claim 1, where the plastics film (6) has an adhesive layer (8) which has been applied to a film substrate (7).

4. Bearing according to Claim 3, where the film substrate (7) comprises a vinyl material or consists of a vinyl material, and/or the adhesive layer (8) comprises an acrylic adhesive or consists thereof.

## Revendications

1. Couche, qui comprend au moins une surface (5), sur laquelle une bande ou plusieurs bandes adjacentes d'un film plastique (6) sont appliquées directement sur un matériau en acier de la couche pour la protection contre la corrosion, des joints étant formés par chevauchement entre les extrémités de la bande et/ou entre les bandes adjacentes du film plastique (6), **caractérisée en ce que** le film plastique (6) est appliqué de manière durable sur la surface (5) et collé avec la couche.

2. Procédé de protection contre la corrosion d'une couche, selon lequel une bande ou plusieurs bandes adjacentes d'un film plastique (6) sont appliquées directement sur un matériau en acier de la couche sur au moins une surface (5) de la couche, et des joints sont formés par chevauchement entre les extrémités de la bande et/ou entre les bandes adjacentes du film plastique (6), **caractérisé en ce que** le film plastique (6) est collé de manière durable sur la surface (5) à l'aide d'une couche adhésive (8) qui est configurée comme étant un constituant du film plastique (6).

3. Couche selon la revendication 1, dans laquelle le film plastique (6) comprend une couche adhésive (8) qui est appliquée sur un film substrat (7).

4. Couche selon la revendication 3, dans laquelle le film substrat (7) comprend un matériau de vinyle ou est constitué d'un matériau de vinyle et/ou la couche adhésive (8) comprend un adhésif acrylique ou en est constituée.
